# EUROPEAN PATENT SPECIFICATION

(11) **EP 2 040 322 B1**
(45) Date of publication and mention of the grant of the patent: **02.11.2011**
(21) Application number: 08165043.4
(22) Date of filing: 24.09.2008
(51) Int. Cl.: H01M 10/052, H01M 10/058

(54) **Electrochemical cell with tightly held electrode assembly**
Elektrochemische Zelle mit fest umschlossener Elektrodenanordnung
Cellule électrochimique dotée d'un ensemble d'électrodes fermement maintenues

(30) Priority: 24.09.2007 US 974496 P
(43) Date of publication of application: 25.03.2009
(73) Proprietor: Greatbatch Ltd., Clarence, NY 14031 (US)
(72) Inventor: Shah, Ashish, East Amherst, NY 14051 (US); Muffoletto, Barry C., Alden, NY 14004 (US); Gan, Hong, Williamsville, NY 14221 (US); Freitag, Gary L., East Aurora, NY 14052 (US)
(74) Representative: Duckett, Anthony Joseph

(56) References cited:
- EP-A- 0 924 779
- EP-A- 1 717 879
- JP-A- 9 161 759
- JP-A- 10 064 506
- JP-A- 10 172 565
- US-A- 5 580 676
- US-A1- 2003 113 618
- US-A1- 2003 232 243
- US-A1- 2005 058 888
- US-A1- 2006 093 902
- US-A1- 2006 099 496
- US-A1- 2007 117 008
- US-B1- 6 383 234

## Description

### BACKGROUND OF THE INVENTION

### 1. Field of the Invention

The present invention relates generally to an electrochemical cell. More particularly, the present invention relates to an electrochemical cell having a stack holder that keeps the electrodes in proper electrochemical alignment with each other, even as their dimensions change during cell discharge.

### 2. Description of Related Art

A typical electrochemical cell that is used to power implantable medical devices is comprised of a casing housing an anode and a cathode. The anode and cathode are separated from each other, typically by enclosing at least one of them within an envelope or bag of insulative separator material. The separator material is typically provided as a thin porous sheet material that is saturated with electrolyte and allows the transport of ions in the electrolyte there through. The anode and cathode are generally formed as one or more respective plates of anode and cathode active material. The plates are then aligned face-to-face with each other to form an electrode assembly or electrode stack within the cell casing. In order to maximize discharge efficiency and stabilize the location of the electrodes within the casing, it is preferable that the electrode assembly be tightly fitted within the walls of the casing while occupying as much internal volume as possible.

During cell discharge, the thicknesses of the plates of cathode active material and anode active material change. The thicknesses of the cathode plates increase while those of the anode decrease. In some cells, the total thickness of the electrode assembly decreases continuously throughout discharge. This occurs because the rate of cathode thickness increase due to lithium intercalation is smaller than the rate of lithium consumption at the anode. As the overall electrode assembly thickness decreases, the electrodes may become loosely held or confined within the casing. There may eventually be sufficient space inside the casing for the electrode assembly to move around within it. This condition is disadvantageous. As the electrodes move, they may no longer be directly opposite each other in their original face-to-face orientation. Misalignment may result in an increase in cell resistance between the cathode and anode, thereby causing lower pulse voltages, faster cell polarization, cell voltage fluctuations, and in general, more delivered capacity variation.

US 2005/058888 A1 describes an anode subassembly for use in an implantable electrochemical cell.

EP 1717879 A1 describes a battery having an electrode assembly including first and second electrode plates housed in a battery case.

EP 0924779 A1 describes a non-aqueous electrolyte secondary battery for use in a power source for a portable electronic apparatus.

US 2006/093902 A1 describes lithium secondary batteries having deformation prevention straps for preventing the electrode assemblies of the lithium secondary batteries from deforming.

US 2003/113618 A1 describes a Li-ion and/or Li-ion polymer battery that is reinforced to maintain the alignment and structural integrity of an assembly of battery cells.

US 6,383,234 B1 describes a method for manufacturing a prismatic lithium secondary battery having an electrode assembly having a separation film between a positive electrode plate and a negative electrode plate.

US 2003/232243 A1 describes a method for treating electrode tabs of a crude cell for a lithium secondary battery.

US 2006/099496 A1 describes a separator container which includes a plurality of containers to alternately receive an anode plate or a cathode plate.

US 5,580,676 describes a rectangular battery which includes a plurality of cathode plates and anode plates alternately superposed via a separator to face each other.

JP 10-172565 A describes a sheet-shaped lithium secondary battery consisting of a negative sheet, a positive sheet, a bag separator, an outer jacket sheet, a negative terminal, a positive terminal, and a nonaqueous liquid electrolyte.

JP 09-161759 A describes electrodes housed in bag-shaped separators, and arranged by alternately superposing a positive and a negative on each other.

JP 10-064506 A describes a square battery in which a plurality of sets each obtained by interposing a separator between a positive electrode and a negative electrode are stacked, an electrode group obtained is housed in a battery container together with an electrolyte, and an upper lid with a terminal is fitted to the container.

What is needed is an electrochemical cell comprising an electrode assembly having an anode and a cathode that are tightly held together in their original face-to-face alignment throughout the entire discharge life of the cell.

### SUMMARY OF THE INVENTION

The present invention relates to an electrochemical cell according to claim 1 and to a method of manufacturing an electrochemical cell according to claim 14.

The present invention meets this need by providing an electrochemical cell comprising a conductive casing housing an electrode assembly. The casing comprises a side wall structure extending to an open end closed by a lid. The electrode assembly comprises a cathode of at least a first plate of cathode active material, an anode of at least a first plate of anode active material, and a separator disposed at an intermediate location between the plates of cathode active material and anode active material. The cell further includes a stack holder surrounding the electrode assembly and formed of a porous material. The stack holder may be formed as a bag that envelopes the electrode assembly. Alternatively, the stack holder may be formed as a band disposed around a perimeter of the electrode assembly. In embodiments in which both plates of the anode and cathode active materials are enclosed by separators, the stack holder may be formed by joining the separators along their respective perimeters that contact each other.

The stack holder is preferably made of an elastic material. In that manner, as the volume of the electrode assembly varies during cell discharge, the volume encircled within or surrounded by the stack holder varies a like amount. In particular, as the circumference of the electrode assembly decreases, the circumference encircled or surrounded within the stack holder also decreases, thus maintaining the desired face-to-face alignment between the anode and cathode plates.

Either or both of the anode and cathode may be comprised of a plurality of plates of their respective electrode active materials. The cell may be provided in either a case-positive or case-negative configuration. Each of the respective plates of electrode active material may be enveloped in its own separator, with the entire electrode assembly then being encircled by the stack holder. In that respect, the stack holder is a component or part that is separate or in addition to that portion of the separator material disposed at an intermediate location between the opposite polarity electrodes.

The foregoing and additional objects, advantages, and characterizing features of the present invention will become increasingly more apparent upon a reading of the following detailed description together with the included drawings.

### BRIEF DESCRIPTION OF THE DRAWINGS

The present invention will be described by reference to the following drawings, in which like numerals refer to like elements, and in which:
FIG. 1 is a cross-sectional view of a first embodiment of an electrochemical cell of the present invention comprised of single anode and cathode plates forming the electrode assembly, and a stack holder provided as a bag enclosing the electrode assembly;
FIG. 1A is a cross-sectional view taken along line 1A-1A of FIG. 1;
FIG. 2 is a cross-sectional view of a second embodiment of an electrochemical cell of the present invention comprised of a stack holder provided as a band disposed around the electrode assembly;
FIGs. 2A and 2B are cross-sectional views of the cell shown in FIG. 2, but illustrating alternate embodiments of band-type stack holders;
FIG. 3 is a cross-sectional view of an alternative embodiment of an electrochemical cell of the present invention comprised of three electrode plates forming the electrode assembly; and
FIG. 4 is a cross-sectional view of another embodiment of an electrochemical cell comprised of single anode and cathode plates forming the electrode assembly, wherein the electrode plates are held in a face-to-face alignment with each other by joining their respective separators together.

The present invention will be described in connection with preferred embodiments, however, it will be understood that there is no intent to limit the invention to the embodiments described.

### DETAILED DESCRIPTION OF THE PREFERRED EMBODIMENTS

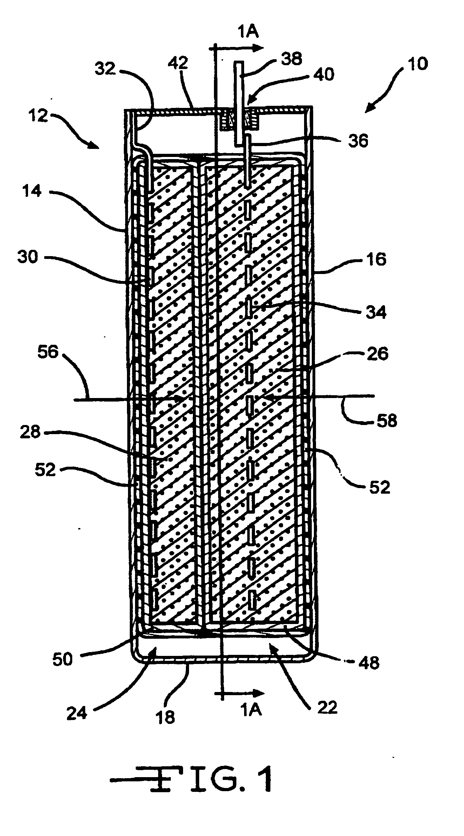

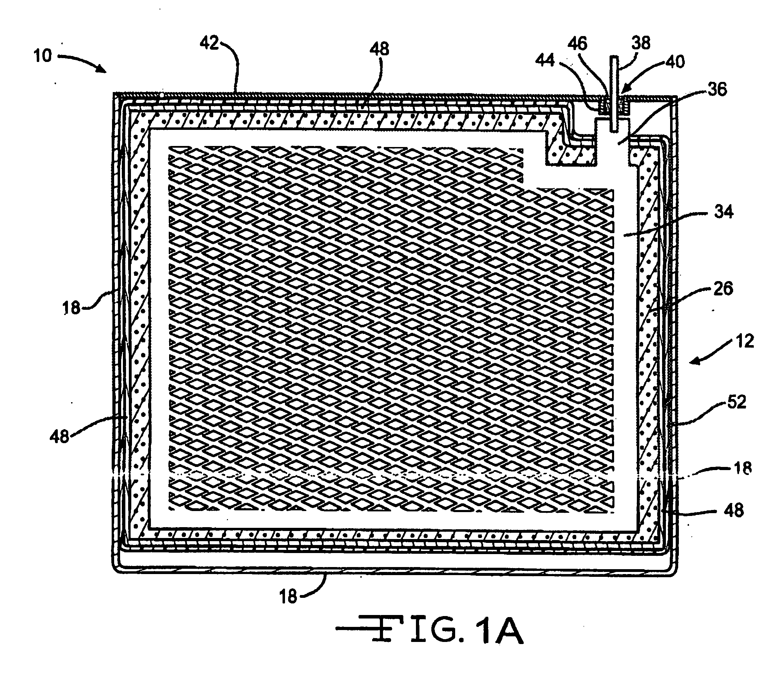

Turning first to FIG. 1, an electrochemical cell 10 of either a primary or secondary, rechargeable chemistry is shown. The cell 10 is comprised of a conductive casing 12 having first and second opposed major face walls 14 and 16 joined to a surrounding side wall 18. The face walls 14, 16 and surrounding side wall 18 form an open ended container that receives an electrode assembly 20, as will be described hereinafter. The open ended container housing the electrode assembly is then closed by a lid 42. The casing and lid may be comprised of materials such as stainless steel, mild steel, nickel-plated mild steel, titanium, tantalum or aluminum, but not limited thereto, so long as the metallic material is compatible for use with the other cell components. The casing lid 42 is typically provided with a first opening to accommodate a glass-to-metal seal/terminal pin feedthrough and a second opening for electrolyte filling.

The electrode assembly or electrode stack 20 comprises a cathode 22 and an anode 24 housed within the casing 12. The cathode 22 is comprised of opposed plates 26 of cathode active material sandwiching a cathode current collector 34. Suitable cathode active materials include fluorinated carbon, silver vanadium oxide, copper silver vanadium oxide, Ag₂O, Ag₂O₂, CuF₂, Ag₂CrO₄, MnO₂, V₂O₅, MnO₂, TiS₂, Cu₂S, FeS, FeS₂, copper oxide, copper vanadium oxide, and mixtures thereof. Suitable cathode current collector materials are selected from the group consisting of stainless steel, titanium, tantalum, platinum, gold, aluminum, cobalt nickel alloys, nickel-containing alloys, highly alloyed ferritic stainless steel containing molybdenum and chromium, and nickel-, chromium- and molybdenum-containing alloys.

The anode 24 is comprised of a plate 28 of anode active material contacting one side of an anode current collector 30. The other, bare side of the anode current collector 30 resides adjacent to the casing major face wall 14. That's because only anode material directly facing the cathode participates in cell discharge. For a primary cell, lithium and its alloys and intermetallic compounds, for example, Li-Si, Li-Al, Li-B and Li-Si-B alloys, are preferred for the anode active material. For a secondary cell, the anode is of a carbonaceous material, for example graphite, that is capable of intercalating and deintercalating lithium ions. Preferably, the anode is a thin metal sheet or foil of lithium metal or graphite, pressed or rolled on a metallic anode current collector selected from titanium, titanium alloy, nickel, copper, tungsten or tantalum. The anode current collector 30 includes a grounding tab 32 that is joined to the major face wall 14 of the casing 12.

Referring to FIG. 1A, the cathode current collector 34 also includes a tab 36 that is joined to a terminal pin 38. The positive terminal pin 38 is typically of molybdenum. An insulative seal 40 surrounds the terminal pin 38 where it passes through the first opening in the lid 42, sealing the terminal pin 38 and isolating it from electrical contact with the casing 12.

Seal 40 is preferably a glass-to-metal seal comprised of a ferrule 44 joined to the lid 42, and a bead 46 of fused glass bonded within the annulus between the ferrule 44 and the terminal pin 38. The ferrule 44 can be made of titanium although molybdenum, aluminum, nickel alloy and stainless steel are also suitable. The glass is of a corrosion resistant type having up to about 50% by weight silicon such as CABAL 12, TA 23, FUSITE 425 or FUSITE 435. Although the cell 10 shown in FIG. 1 is of a case-negative design, it is to be understood that the present invention is also applicable to cells of a case-positive design.

Cell 10 is further comprised of a first separator enveloping at least one of the cathode 22 and the anode 24. In the case-negative cell design shown in FIGs. 1 and 1A, the separator 48 envelopes the cathode plates 26, thereby insulating them from direct physical contact with the anode plate 28 and the negative polarity casing 12. For the sake of redundancy, the cell 10 may further include a second separator 50 enclosing the anode plate 28.

The separators 48, 50 are of an electrically insulative material that is chemically unreactive with the anode and cathode active materials and both chemically unreactive with and insoluble in the electrolyte. In addition, the separator material has a degree of porosity sufficient to allow flow there through of the electrolyte during the electrochemical reaction of the cell. Illustrative separator materials include fabrics woven from fluoropolymeric fibers including polyvinylidine fluoride, polyethylenetetrafluoroethylene, and polyethylenechlorotrifluoroethylene used either alone or laminated with a fluoropolymeric microporous film, non-woven glass, polypropylene, polyethylene, glass fiber materials, ceramics, polytetrafluoroethylene membrane commercially available under the designation ZITEX (Chemplast Inc.), polypropylene membrane commercially available under the designation CELGARD (Celanese Plastic Company, Inc.) and a membrane commercially available under the designation DEXIGLAS (C. H. Dexter, Div., Dexter Corp.).

The cell 10 is thereafter filled with the electrolyte solution and hermetically sealed such as by close-welding a stainless steel ball over the second opening in the lid 42 serving as a fill-hole. The electrolyte serves as a medium for migration of ions between the anode 24 and the cathode 22 during the electrochemical reactions of the cell. For both a primary and a secondary cell chemistry, electrochemical reaction at the electrodes involves conversion of ions in atomic or molecular forms which migrate from the anode 24 to the cathode 22. A suitable electrolyte has an inorganic, ionically conductive salt dissolved in a nonaqueous solvent, and more preferably, the electrolyte includes an ionizable lithium salt dissolved in a mixture of aprotic organic solvents comprising a low viscosity solvent and a high permittivity solvent. The inorganic, ionically conductive salt serves as the vehicle for migration of the anode ions to intercalate or react with the cathode active materials. Suitable lithium salts include LiPF₆, LiBF₄, LiA₅F₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆F₅SO₃, LiO₂CCF₃, LiSO₆F, LiB(C₆H₅)₄, LiCF₃SO₃, and mixtures thereof.

Low viscosity solvents useful with the present invention include esters, linear and cyclic ethers and dialkyl carbonates such as tetrahydrofuran (THF), methyl acetate (MA), diglyme, trigylme, tetragylme, dimethyl carbonate (DMC), 1,2-dimethoxyethane (DME), 1,2-diethoxyethane (DEE), 1-ethoxy,2-methoxyethane (EME), ethyl methyl carbonate (EMC), methyl propyl carbonate, ethyl propyl carbonate, diethyl carbonate (DEC), dipropyl carbonate, and mixtures thereof, and high permittivity solvents include cyclic carbonates, cyclic esters and cyclic amides such as propylene carbonate (PC), ethylene carbonate (EC), butylene carbonate, acetonitrile, dimethyl sulfoxide, dimethyl formamide, dimethyl acetamide, γ-valerolactone, γ-butyrolactone (GBL), N-methyl-pyrrolidinone (NMP), and mixtures thereof.

In order to maintain the electrode plates 26 and 28 in proper electrochemical face-to-face alignment with each other during cell discharge, a stack holder 52 according to the present invention surrounds the electrode assembly 20. Referring to FIG. 1, in one embodiment the stack holder 52 is formed as a bag that encloses or envelopes the electrode assembly 20 to maintain proper face-to-face electrochemical alignment between the anode and cathode plates. The stack holder 52 covers the outwardly facing side walls of the electrode assembly as well as the opposed ends adjacent to the casing bottom wall 18 and the lid 42.

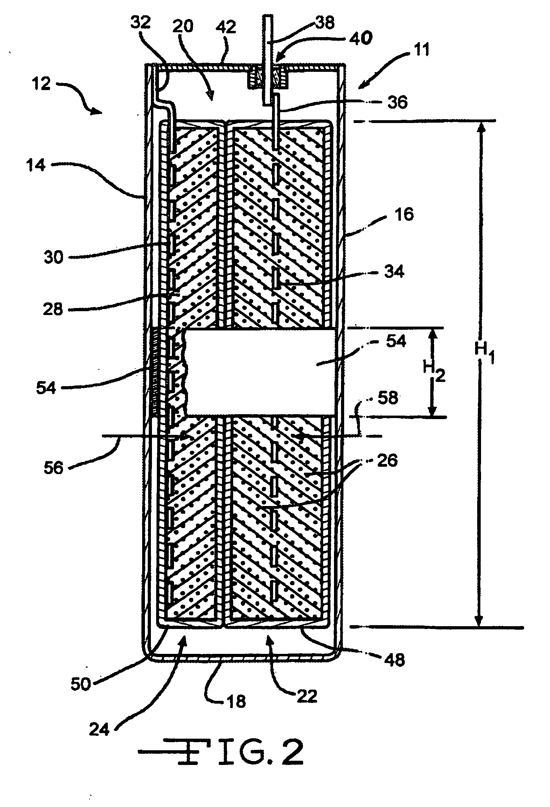

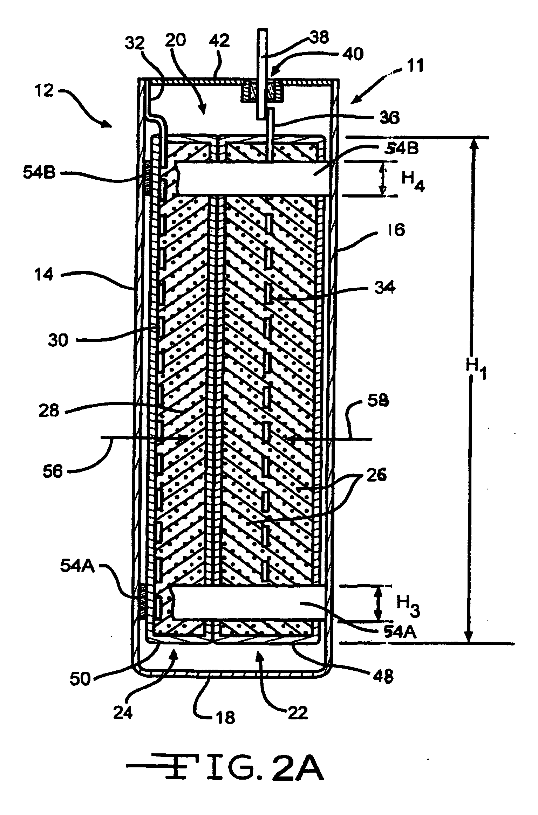

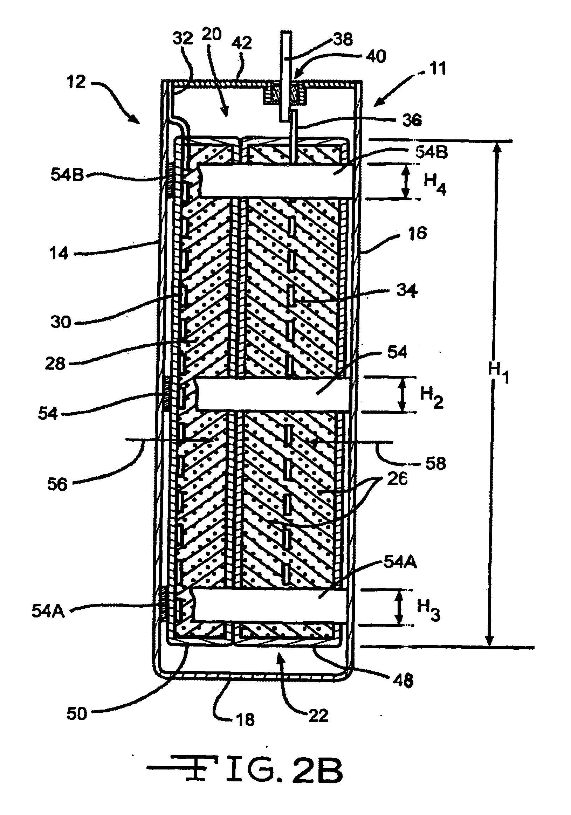

Referring next to FIG. 2, the stack holder may alternatively be formed as a band 54 disposed in an encircling relationship with a portion of the electrode assembly 20. As used herein with respect to a stack holder, the term "encircling" is meant to indicate that the stack holder is disposed around a portion of the perimeter of the electrode assembly 20 in an orientation such that it holds the two or more electrode plates in a constrictive, face-to-face alignment as the cell is discharged, as indicated by arrows 56 and 58 shown in FIGs. 1, 1A, 2 to 2B and 3. As long as it provides constrictive forces to hold the electrode plates together, it is not necessary that the stack holder cover the entire electrode assembly 20 (as the shown stack holder 52 does). The function of the stack holder is to maintain proper face-to-face electrochemical alignment between the anode and cathode plates.

In that respect, FIG. 2 illustrates the electrode assembly 20 comprising the cathode 22 and anode 24 being aligned in a face-to-face relationship suitable for acceptable electrochemical discharge. The electrode assembly 20 has a total height H₁ determined by measuring the cathode 22 and anode 24 from adjacent to the bottom wall 18 of the casing to adjacent the lid 42. The stack holder 54 encircles the circumference of the electrode assembly 20 and has a height H₂ that is at least 5% of H₁ to a maximum of 100% of H₁.

FIG. 2A illustrates another embodiment of cell 11 where stack holder 54 has been replaced by stack holders 54A and 54B. Stack holder 54A has a height H₃ and encircles the circumference of the electrode assembly 20 adjacent to the casing bottom wall 18 while stack holder 54B has a height H₄ and encircles the circumference of the electrode assembly adjacent to the lid 42. The respective heights H₃ and H₄ of the stack holders 54A and 54B can be less than the height of H₂ of stack holder 54 shown in FIG. 2 as long as their cumulative heights H₃ + H₄ are at least 5% of the height H₁ of the electrode assembly. Stack holders 54A and 54B can have the same or different heights.

FIG. 2B illustrates still another embodiment of cell 11 where stack holders 54 is supplemented with additional stack holders 54A and 54B. As with the embodiment show in FIG. 2A, the stack holder 54A encircles the circumference of the electrode assembly adjacent to the bottom wall 18 of the casing while stack holder 54B encircles the circumference of the electrode assembly adjacent to the lid 42. The cumulative heights H₂, H₃ and H₄ of the respective stack holders 54, 54A and 54B are preferably at least 5% of the height H₁ of the electrode assembly.

It will also be apparent to those skilled in the art that while three stack holders are shown in FIG. 2B, that should not be taken as limiting. Any number of band-type stack holders can be provided in a surrounding, encircling relationship with the electrode assembly 20, just as long as their cumulative heights are at least 5% of the total height of the electrode assembly.

The stack holders 52, 54, 54A and 54B may be made of the same materials used for the separators 48 and 50. In one preferred embodiment, the holder material is an elastic material capable of accommodating an initial expansion of the cathode that may occur at the early stage of cell discharge, and subsequent shrinkage of the electrode stack 20 during later stages of cell discharge. The term elastic is defined as a material that is capable of quickly recovering its original size and shape after a deformation force is removed.

Suitable materials that are also useful for the stack holders 52, 54, 54A and 54B are the same materials that are used for separators 48, 50 and include fabrics woven from fluoropolymeric fibers including polyvinylidine fluoride, polyethylenetetrafluoroethylene, and polyethylenechlorotrifluoroethylene used either alone or laminated with a fluoropolymeric microporous film, non-woven glass, polypropylene, polyethylene, glass fiber materials, ceramics, polytetrafluoroethylene membrane commercially available under the designation ZITEX (Chemplast Inc.), polypropylene membrane commercially available under the designation CELGARD (Celanese Plastic Company, Inc.) and a membrane commercially available under the designation DEXIGLAS (C. H. Dexter, Div., Dexter Corp.). These materials can be provided in a bi-layer or tri-layer construction. An example is a tri-layer polymeric material of polypropylene/polyethylene/polyethylene (PP/PE/PE).

In fabrication, the stack holder material may be wrapped around the electrode assembly and held under tension in a fixture to provide constrictive forces against the electrode plates 26 and 28. The stack holder material may be heat sealed in a manner similar to that used to fabricate individual electrode plate separators 48 and 50.

As used herein, the term "porous" refers to a material that has sufficient permeability to permit an acceptable degree of ion flow there through to support electrochemical discharge. On the other hand, a non-porous material may have some permeability, but not to a degree sufficient to permit ion flow to sustain an electrochemical discharge.

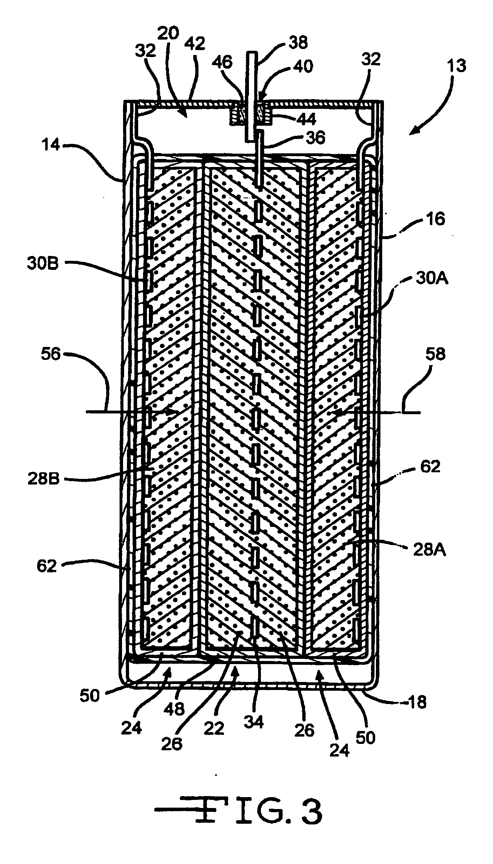

In other embodiments, either or both of the anode and cathode may be comprised of a plurality of plates of their respective electrode active materials. Each of the respective plates of electrode active material may be enveloped in its own separator, with the entire electrode assembly being further encircled by an elastic stack holder. One exemplary cell comprised of multiple electrode plates is shown in FIG. 3. Cell 13 is built in a case-negative design having a cathode 22 comprised of a cathode plate 26 disposed at an intermediate location between an anode 24 comprised of a first anode plate 28A contacting one side of an anode current collector 30A and a second anode plate 28B contacting one side of a second anode current collector 30B. The anode plates 28A, 28B face the central cathode plates 26 because only anode active material directly opposite cathode active material participates in electrochemical discharge. The stack holder 62 applies constrictive forces indicated by arrows 56 and 58 against electrode plates 26, 28A and 28B, thereby maintaining proper face-to-face electrochemical alignment between the plates during cell discharge. It will be apparent that cell 13 may be comprised of additional plates of anode and cathode active material compressed or constricted into face-to-face alignment by the stack holder 62.

It is noted that the exemplary cells 10, 11 and 13 of respective FIGs. 1 to 3 are comprised of individual electrode plates that are typically fabricated separately. However, the present invention is not to be construed as limited to such an electrode configuration. Other cells having serpentine or jellyroll electrode configurations may be provided with a stack holder in accordance with the present invention. Therefore, the term "electrode plate" used herein is meant to indicate any structure of electrode active material that is alignable in a substantially face-to-face orientation or alignment with one or more adjacent portions of an opposite polarity electrode active material.

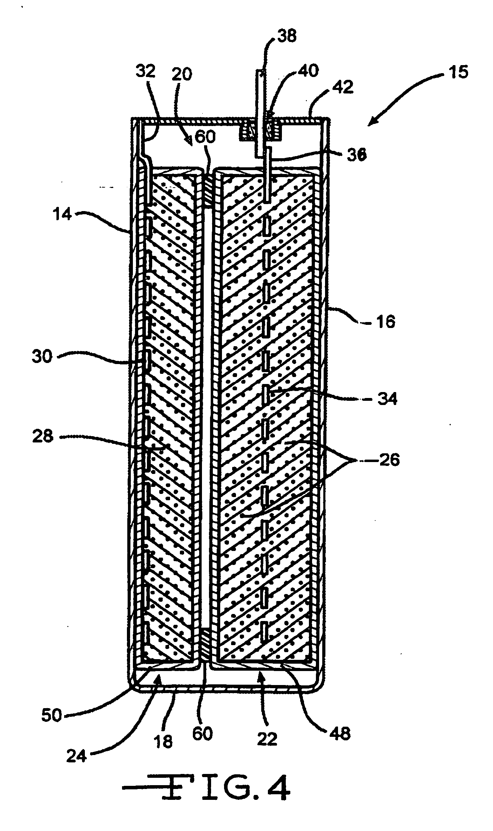

Fig. 4 is a cross-sectional view of a freshly built electrochemical cell 15 that has not yet been discharged. The cell is comprised of single anode and cathode plates forming the electrode assembly. The electrodes are held in proper face-to-face electrochemical alignment with each other by joining their respective elastic separators together. In that respect, cell 15 is similar in construction to the cell 10 of FIGs. 1 and 1A, except the stack holder that encircles the electrode assembly 20 has been removed. Instead, constrictive forces between the face-to-face opposite polarity electrodes are provided along the perimeter of the separators 48 and 50 where they contact each other. Electrode plates 26 and 28 are held in close contact with each other by joining their respective separators 48 and 50 to each other. Since the separators 48, 50 are made of an elastic material, that portion of each separator lying against a major face wall of the anode and cathode tends to pull or constrict that electrode toward the other. This is possible because the separators are provided in a stretched state in comparison to a relaxed, non-deformed condition. Separators 48 and 50 may be joined intermittently along portions of their respective perimeters that contact each other, or along the entire perimeter of contact.

In one preferred embodiment, separators 48 and 50 are joined to each other by a heat seal 60. For the sake of clarity of illustration, heat seal 60 is depicted as being relatively thick compared to respective electrode plates 26 and 28. It is to be understood that the respective separators 48 and 50 for electrodes 26 and 28 are in closer contact with each other than is shown in FIG. 4, and this contact relationship is maintained throughout the cell discharge. Regardless whether the stack holder is an envelope as shown in FIGs. 1 and 1A, at least one band-type structure as shown in FIGs. 2 to 2B and 3, or a heat seal between respective separators enveloping the anode and cathode, the opposite polarity electrodes must be close enough to each other to ensure that electrolyte wets the entire interface between them by capillary action. This must persist through the discharge life of the cell and is the primary purpose of the stack holder.

It is, therefore, apparent that an electrochemical cell is provided with a stack holder that surrounds the electrode assembly or stack thereof. The stack holder maintains the desired face-to-face electrical alignment between the opposite polarity electrode plates as the cell is discharged.

An aspect of the invention provides a method for providing an electrochemical cell, comprising the steps:
a) providing a conductive casing comprising a surrounding side wall extending to an open end;
b) housing an electrode assembly inside the casing, the electrode assembly comprising:
   i) a cathode comprised of at least a first cathode plate of cathode active material;
   ii) an anode comprised of at least a first anode plate of anode active material; and
   iii) a first separator disposed at an intermediate location between the first cathode plate and the first anode plate to prevent them from direct physical contact with each other;
c) encircling the electrode assembly with a stack holder;
d) closing the open end of the casing container with a lid; and
e) activating the electrode assembly with an electrolyte, wherein the stack holder material is porous.

The method may include providing the stack holder as a bag enveloping the electrode assembly distinct from the separator.

The method may include providing the stack holder as at least one band-type stack holder encircling a perimeter of the electrode assembly.

The method may include providing the band-type stack holder encircling the electrode assembly having a height ranging from about 5% to 100% of a height of the electrode assembly.

The method may include providing at least two band-type stack holders encircling the electrode assembly.

The method may include providing one of the band-type stack holders encircling the electrode assembly adjacent to a bottom of the casing and the other encircling the electrode assembly adjacent to the lid.

The method may include providing the at least two band-type stack holders encircling the electrode assembly having a cumulative height ranging from about 5% to 100% of a height of the electrode assembly.

The method may include providing the at least two band-type stack holders encircling the electrode assembly having the same or different heights.

The method may include providing the stack holder of an elastic material.

The method may include selecting the stack holder from the group consisting of polyvinylidine fluoride, polyethylenetetrafluoroethylene, polyethylenechlorotrifluoroethylene, polytetrafluoroethylene, polypropylene, polyethylene, polyimide, glass fiber, ceramic fiber, and laminates thereof.

## Claims

1. An electrochemical cell, comprising:
a) a conductive casing comprising a surrounding side wall extending to an open end closed by a lid;
b) an electrode assembly comprising:
i) a cathode comprised of at least a first plate of cathode active material;
ii) an anode comprised of at least a first plate of anode active material; and
iii) a first separator disposed at an intermediate location between the first plates of anode active material and cathode active material to prevent them from direct physical contact with each other; and
c) a stack holder surrounding the electrode assembly,
wherein the stack holder material is porous.

2. The electrochemical cell of claim 1 wherein the stack holder is a bag enveloping the electrode assembly distinct from the separator.

3. The electrochemical cell of claim 1 wherein the stack holder is at least one band-type stack holder encircling a perimeter of the electrode assembly.

4. The electrochemical cell of claim 3 wherein the band-type stack holder encircling the electrode assembly has a height ranging from about 5% to 100% of a height of the electrode assembly.

5. The electrochemical cell of claim 1 wherein there are at least two band-type stack holders encircling the electrode assembly.

6. The electrochemical cell of claim 5 wherein one of the band-type stack holders encircles the electrode assembly adjacent to a bottom of the casing and the other encircles the electrode assembly adjacent to the lid.

7. The electrochemical cell of claim 5 or claim 6 wherein the at least two band-type stack holders encircling the electrode assembly have a cumulative height ranging from about 5% to 100% of a height of the electrode assembly.

8. The electrochemical cell of any of claims 5 to 7 wherein the at least two band-type stack holders encircling the electrode assembly have the same or different heights.

9. The electrochemical cell of any of claims 1 to 8 wherein the stack holder is of an elastic material.

10. The electrochemical cell of any of claims 1 to 8 wherein the stack holder is of a material selected from the group consisting of polyvinylidine fluoride, polyethylenetetrafluoroethylene, polyethylenechlorotrifluoroethylene, polytetrafluoroethylene, polypropylene, polyethylene, polyimide, glass fiber, ceramic fiber, and laminates thereof

11. The electrochemical cell of any of claims 1 to 10 wherein the electrode assembly is further comprised of a second separator enveloping the other of the first plate of cathode active material and the first plate of anode active material.

12. The electrochemical cell of any of claims 1 to 11 wherein the anode is comprised of a plurality of plates of anode active material and the cathode is comprised of a plurality of plates of cathode active material.

13. The electrochemical cell of any of claims 1 to 12 wherein the anode is comprised of a current collector electrically connected to the conductive casing, and the cathode is comprised of a current collector joined to a conductive terminal pin passing through an insulative seal in the casing.

14. A method for providing an electrochemical cell, comprising the steps:
a) providing a conductive casing comprising a surrounding side wall extending to an open end;
b) housing an electrode assembly inside the casing, the electrode assembly comprising:
i) a cathode comprised of at least a first cathode plate of cathode active material;
ii) an anode comprised of at least a first anode plate of anode active material; and
iii) a first separator disposed at an intermediate location between the first cathode plate and the first anode plate to prevent them from direct physical contact with each other;
c) encircling the electrode assembly with a stack holder;
d) closing the open end of the casing container with a lid; and
e) activating the electrode assembly with an electrolyte,
wherein the stack holder material is porous.

15. The method of claim 14 including providing a stack holder or stack holders having the features recited in any of claims 2 to 10.

## Patentansprüche

1. Elektrochemische Zelle, enthaltend:
a) ein leitfähiges Gehäuse, das eine umgebende Seitenwand enthält, die sich zu einem offenen Ende erstreckt, das von einem Deckel verschlossen ist;
b) eine Elektrodenanordnung, enthaltend:
i) eine Kathode, enthaltend wenigstens eine erste Platte kathodenaktiven Materials;
ii) eine Anode, enthaltend wenigstens eine erste Platte anodenaktiven Materials;
iii) einen ersten Separator, der an einem zwischen den ersten Platten anodenaktiven Materials und kathodenaktiven Materials gelegenen Ort angeordnet ist, um sie von direktem physikalischen Kontakt miteinander abzuhalten; und
c) einen Stapelhalter, der die Elektrodenanordnung umgibt, wobei das Stapelhaltermaterial porös ist.

2. Elektrochemische Zelle gemäß Anspruch 1, bei der der Stapelhalter ein Sack ist, der die Elektrodenanordnung abgegrenzt von dem Separator umhüllt.

3. Elektrochemische Zelle gemäß Anspruch 1, bei der der Stapelhalter wenigstens ein Bandtyp-Stapelhalter ist, der einen Umfang der Elektrodenanordnung umgibt.

4. Elektrochemische Zelle gemäß Anspruch 3, bei der der die Elektrodenanordnung umgebende Bandtyp-Stapelhalter eine Höhe im Bereich von etwa 5 % bis 100 % einer Höhe der Elektrodenanordnung aufweist.

5. Elektrochemische Zelle gemäß Anspruch 1, bei der es wenigstens zwei Bandtyp-Stapelhalter gibt, die die Elektrodenanordnung umgeben.

6. Elektrochemische Zelle gemäß Anspruch 5, bei der einer der Bandtyp-Stapelhalter die Elektrodenanordnung benachbart zu einem Boden des Gehäuses umgibt und der andere die Elektrodenanordnung benachbart zu dem Deckel umgibt.

7. Elektrochemische Zelle gemäß Anspruch 5 oder Anspruch 6, bei der die wenigstens zwei Bandtyp-Stapelhalter, die die Elektrodenanordnung umgeben, eine kumulative Höhe im Bereich von etwa 5 % bis 100 % einer Höhe der Elektrodenanordnung aufweisen.

8. Elektrochemische Zelle gemäß irgendeinem der Ansprüche 5 bis 7, bei der die wenigstens zwei Bandtyp-Stapelhalter, die die Elektrodenanordnung umgeben, dieselben oder unterschiedliche Höhen haben.

9. Elektrochemische Zelle gemäß irgendeinem der Ansprüche 1 bis 8, bei der der Stapelhalter aus einem elastischen Material ist.

10. Elektrochemische Zelle gemäß irgendeinem der Ansprüche 1 bis 8, bei der der Stapelhalter aus einem Material ist, das aus der Gruppe ausgewählt ist, die aus Polyvinylidinfluorid, Polyethylentetrafluoroethylen, Polyethylenchlorotrifluoroethylen, Polytetrafluoroethylen, Polypropylen, Polyethylen, Polyimid, Glasfaser, Keramikfaser und deren Laminaten besteht.

11. Elektrochemische Zelle gemäß irgendeinem der Ansprüche 1 bis 10, bei der die Elektrodenanordnung ferner einen zweiten Separator enthält, der den anderen aus der ersten Platte kathodenaktiven und der zweiten Platte kathodenaktiven Materials umhüllt.

12. Elektrochemische Zelle gemäß irgendeinem der Ansprüche 1 bis 11, bei der die Anode eine Mehrzahl von Platten anodenaktiven Materials enthält und die Kathode eine Mehrzahl von Platten kathodenaktiven Materials enthält.

13. Elektrochemische Zelle gemäß irgendeinem der Ansprüche 1 bis 12, bei der die Anode einen Stromabnehmer enthält, der elektrisch mit dem leitfähigen Gehäuse verbunden ist, und die Kathode einen Stromabnehmer enthält, der an einen leitfähigen Anschlusspin mittels einer isolierenden Versiegelung in dem Gehäuse angeschlossen ist.

14. Verfahren zum Bereitstellen einer elektrochemischen Zelle, enthaltend die Schritte:
a) Bereitstellen eines leitfähigen Gehäuses, das eine umgebende Seitenwand enthält, die sich zu einem offenen Ende erstreckt;
b) Anordnen einer Elektrodenanordnung innerhalb des Gehäuses, wobei die Elektrodenanordnung enthält:
i) eine Kathode, die wenigstens eine erste Kathodenplatte kathodenaktiven Materials enthält;
ii) eine Anode, die wenigstens eine erste Anodenplatte anodenaktiven Materials enthält; und
iii) einen ersten Separator, der an einem zwischen der ersten Kathodenplatte und der ersten Anodenplatte gelegenen Ort angeordnet ist, um sie von direktem physikalischen Kontakt miteinander abzuhalten;
c) Umgeben der Elektrodenanordnung mit einem Stapelhalter;
d) Verschließen des offenen Endes des Gehäusebehälters mit einem Deckel; und
e) Aktivieren der Elektrodenanordnung mit einem Elektrolyt, wobei das Stapelhaltermaterial porös ist.

15. Verfahren gemäß Anspruch 14, enthaltend das Bereitstellen eines Stapelhalters oder von Stapelhaltern, der oder die die in irgendeinem der Ansprüche 2 bis 10 genannten Merkmale aufweist oder aufweisen.

## Revendications

1. Cellule électrochimique, comprenant :
a) un logement conducteur comprenant une paroi latérale périphérique s'étendant vers une extrémité ouverte fermée par un couvercle ;
b) un ensemble d'électrodes comprenant :
i) une cathode composée d'au moins une première plaque de matériau actif de cathode ;
ii) une anode composée d'au moins une première plaque de matériau actif d'anode ; et
iii) un premier séparateur disposé à un emplacement intermédiaire entre les premières plaques de matériau actif d'anode et de matériau actif de cathode pour empêcher leur contact physique direct ; et
c) un élément de maintien d'empilement entourant l'ensemble d'électrodes, le matériau de l'élément de maintien d'empilement étant poreux.

2. Cellule électrochimique selon la revendication 1, dans laquelle l'élément de maintien d'empilement est un sac enveloppant l'ensemble d'électrodes distinct du séparateur.

3. Cellule électrochimique selon la revendication 1, dans laquelle l'élément de maintien d'empilement est au moins un élément de maintien d'empilement de type bande encerclant un périmètre de l'ensemble d'électrodes.

4. Cellule électrochimique selon la revendication 3, dans laquelle l'élément de maintien d'empilement de type bande encerclant l'ensemble d'électrodes a une hauteur allant d'environ 5 % à 100 % d'une hauteur de l'ensemble d'électrodes.

5. Cellule électrochimique selon la revendication 1, dans laquelle il existe au moins deux éléments de maintien d'empilement de type bande entourant l'ensemble d'électrodes.

6. Cellule électrochimique selon la revendication 5, dans laquelle un des éléments de maintien d'empilement de type bande encercle l'ensemble d'électrodes de façon adjacente à un fond du logement et l'autre encercle l'ensemble d'électrodes de façon adjacente au couvercle.

7. Cellule électrochimique selon la revendication 5 ou la revendication 6, dans laquelle lesdits au moins deux éléments de maintien d'empilement de type bande encerclant l'ensemble d'électrodes ont une hauteur cumulative allant d'environ 5 % à 100 % d'une hauteur de l'ensemble d'électrodes.

8. Cellule électrochimique selon l'une quelconque des revendications 5 à 7, dans laquelle lesdits au moins deux éléments de maintien d'empilement de type bande encerclant l'ensemble d'électrodes ont les mêmes hauteurs ou des hauteurs différentes.

9. Cellule électrochimique selon l'une quelconque des revendications 1 à 8, dans laquelle l'élément de maintien d'empilement est constitué d'un matériau élastique.

10. Cellule électrochimique selon l'une quelconque des revendications 1 à 8, dans laquelle l'élément de maintien d'empilement est constitué d'un matériau choisi dans le groupe constitué par le fluorure de polyvinylidine, le polyéthylènetétrafluoroéthylène, le polyéthylènechlorotrifluoroéthylène, le polytétrafluoroéthylène, le polypropylène, le polyéthylène, le polyimide, la fibre de verre, la fibre céramique et leurs laminés.

11. Cellule électrochimique selon l'une quelconque des revendications 1 à 10, dans laquelle l'ensemble d'électrodes est en outre constitué d'un second séparateur enveloppant l'autre de la première plaque de matériau actif de cathode et de la première plaque de matériau actif d'anode.

12. Cellule électrochimique selon l'une quelconque des revendications 1 à 11, dans laquelle l'anode est constituée d'une pluralité de plaques de matériau actif d'anode et la cathode est constituée d'une pluralité de plaques de matériau actif de cathode.

13. Cellule électrochimique selon l'une quelconque des revendications 1 à 12, dans laquelle l'anode est constituée d'un collecteur de courant connecté électriquement au logement conducteur, et la cathode est constituée d'un collecteur de courant assemblé à une broche terminale conductrice passant à travers un joint d'isolation dans le logement.

14. Procédé destiné à fournir une cellule électrochimique, comprenant les étapes consistant à :
a) fournir un logement conducteur comprenant une paroi latérale périphérique s'étendant vers une extrémité ouverte ;
b) loger un ensemble d'électrodes à l'intérieur du logement, l'ensemble d'électrodes comprenant :
i) une cathode composée d'au moins une première plaque de matériau actif de cathode ;
ii) une anode composée d'au moins une première plaque de matériau actif d'anode ; et
iii) un premier séparateur disposé à un emplacement intermédiaire entre les premières plaques de matériau actif d'anode et de matériau actif de cathode pour empêcher leur contact physique direct ; et
c) encercler l'ensemble d'électrodes avec un élément de maintien d'empilement ;
d) fermer l'extrémité ouverte du conteneur de logement avec un couvercle ; et
e) activer l'ensemble d'électrodes avec un électrolyte, le matériau de l'élément de maintien d'empilement étant poreux.

15. Procédé selon la revendication 14, comprenant la fourniture d'un élément de maintien d'empilement ou d'éléments de maintien d'empilement ayant les caractéristiques indiquées dans l'une quelconque des revendications 2 à 10.
